# EUROPEAN PATENT APPLICATION

(11) **EP 1 719 717 A1**
(43) Date of publication of application: **08.11.2006**
(21) Application number: 05076046.1
(22) Date of filing: 04.05.2005
(51) Int. Cl.: B65G 21/18, B65G 17/08

(54) **Self-supporting conveyor**

(71) Applicant: Ashworth Jonge Poerink B.V., 7547 TC Enschede (NL)
(72) Inventor: Van Faassen, Willem, 7556 LN Hengelo (ov) (NL)
(74) Representative: 't Jong, Bastiaan Jacob

(57) **Abstract**

The invention relates to a stacker comprising:
- at least two drums (2) arranged vertically and at a distance to each other;
- an endless stacker conveyor belt (3), at least partially wound around the at least two drums;
- locking means (18,20) for locking adjacent layers of the stacker conveyor belt to each other; and
- support means (6) for supporting the bottom layer of the endless stacker belt.

## Description

The invention relates to a stacker, in particular an oval stacker for use in for example bakeries.

After baking bread products, these products have to be cooled off. In a continuous process this results in a rather long cooling section in the transport system.

A device is known, which provides this cooling section comprising two vertically and at a distance of eachother arranged drums, around which an endless conveyor belt is wound. Each layer of this conveyor belt has its own guide and support rail. Due to these guide rails a rather high structure results to provide the cooling section.

Another disadvantage of such a system with guide rails is the friction between the conveyor belt and the guide rail resulting in small particles falling onto the products on the conveyor belt. This is also called "speck".

Such cooling sections are generally supported from the ceiling and a short building height is in such cases important as the height of the sealing is limited.

It is therefore an object of the invention to provide a conveyor belt system which reduces or alleviates the above-mentioned disadvantages. This object is achieved according to the invention by a stacker comprising:
- at least two drums arranged vertically and at a distance of eachother;
- an endless stacker conveyor belt, at least partially wound around the at least two drums;
- locking means for locking adjacent layers of the stacker conveyor belt to eachother; and
- support means for supporting the bottom layer of the endless stacker belt.

A stacker is known in the field as a conveyor system in which layers of the conveyor belt are placed above eachother and wherein a layer is supported by the layer below. This could be on only one side of the conveyor belt, which is called a "half stacker" or on both sides, which is called a "full stacker".

By using a stacker, guides are no longer necessary, which reduces the build height of such a conveyor belt system. Also due to the lack of guides the friction is also lacking and therefore no particles are any longer spilled onto the products on the conveyor belt. By using only a stacker conveyor belt in a cooling section with two drums, the risk rises that in the portion between the two drums layers of the conveyor belt can shift in relation to eachother in transverse direction, which might result in a collapse of the conveyor belt as soon as one layer completely shift off its supporting layer. In order to avoid this risk, locking means are provided, which lock adjacent layers of the stacker conveyor belt to eachother.

In an embodiment of the stacker according to the invention the support means comprise at least one support conveyor belt for supporting at least the portion of the bottom layer between the at least two drums. This support conveyor belt supports the stack of conveyor belt layer portions and can also drive at least partially the stacker conveyor belt.

In such a case the at least one support conveyor belt is driven.

In a preferred embodiment of the stacker according to the invention the endless stacker conveyor belt comprises a plurality of links having a support element for supporting part of an upper layer of the stacker conveyor belt.

Preferably the support element of a link comprises a protrusion extending from the support surface and the link comprises a recess for reception of a protrusion of a lower link.

In another embodiment the support element of a link is provided with flanges, which also keep adjacent conveyor belt layers locked to eachother. The protrusion has the advantage that the driving force present in the belt is distributed evenly over the several links and several layers which reduces excessive forces in the belt.

In yet another preferred embodiment the protrusion is removably arranged on the link. In this way a regular stacker belt can be used and a protrusion can be arranged onto the link, for example by a snapping action.

In still another embodiment the locking means comprise at least one rod extending substantially vertically through the several layers of the conveyor belt. The rod is kept from falling out of the conveyor belt stack by the support means for support in the bottom layer of the endless stacker belt. When a new portion of conveyor belt is introduced into the stack, the rod will automatically fall into the links of this new portion freeing at the top of the stack another portion which can leave the stack at that moment.

Furthermore driving means can be provided for driving the endless stacker conveyor belt.

These and other advantages of the invention will be elucidated in conjunction with the accompanying drawings.

Figure 1 shows in perspective view an embodiment of a stacker according to the invention.

Figure 2 shows in perspective view from below the stacker according to figure 1.

Figure 3 shows a detail of the stacker according to figure 1 in perspective view.

Figure 4 shows a link of the stacker conveyor belt.

Figure 5 shows a second embodiment of two layers of the stacker conveyor belt.

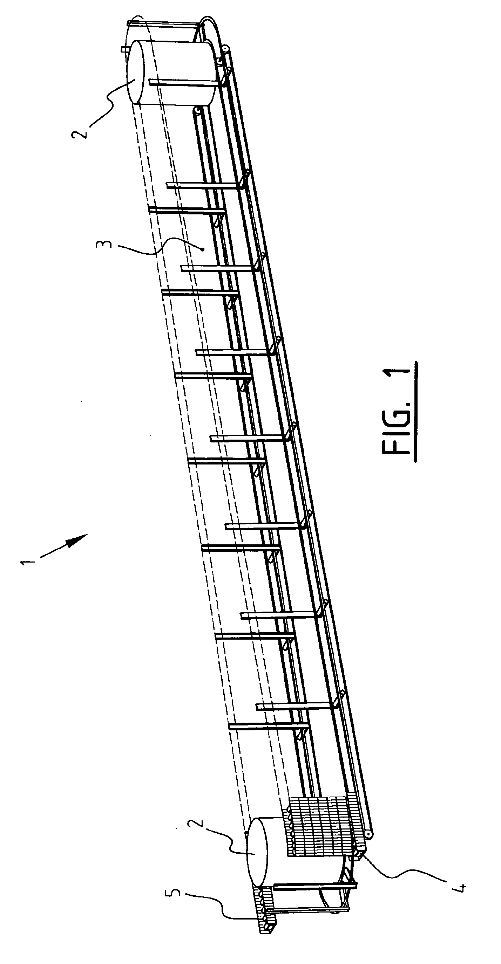

Figure 1 shows in perspective view a stacker 1 according to the invention. This stacker 1 has two vertically arranged drums 2 around which a stacker conveyor belt 3 is wound. The conveyor belt 3 is fed to the stacker at the entry position 4 and leaves the stacker at the exit position 5.

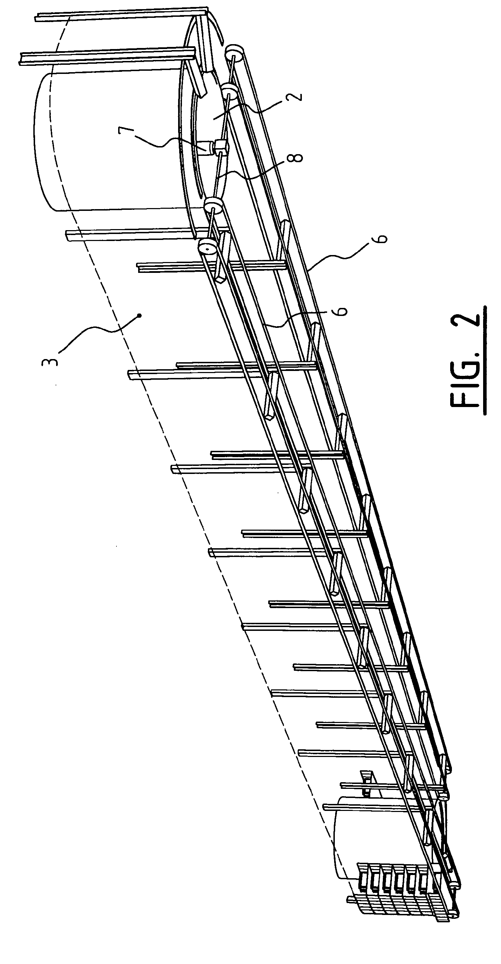

From figure 2 it is clear that the stacker layer portions in between the two drums 2 are supported by a support conveyor belt 6, which supports the bottom layer of the conveyor belt 3. The drum 2 is driven by a motor 7 and both support conveyor belts 6 are connected to this motor 7 by a shaft 8.

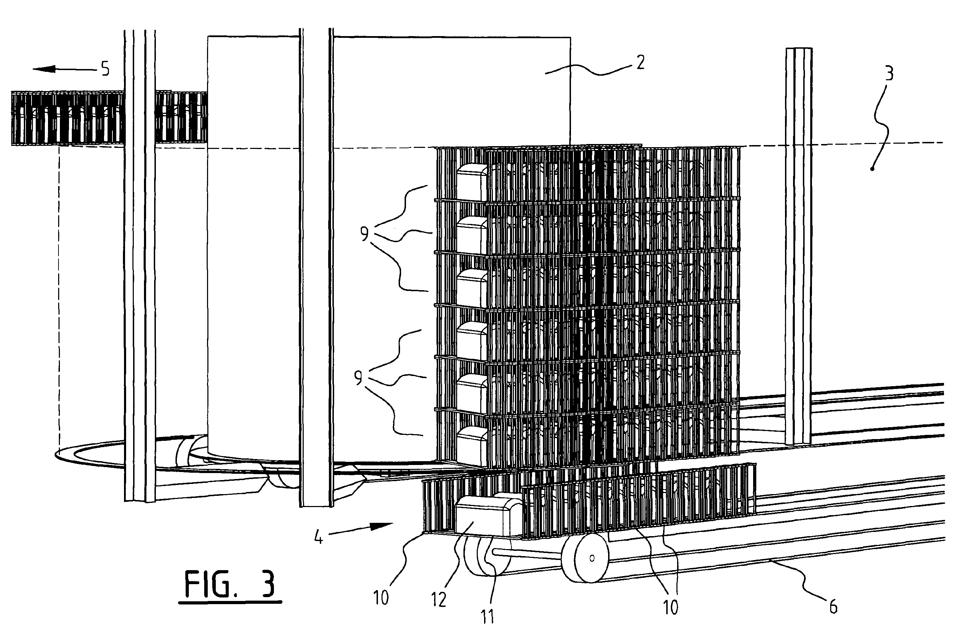

In figure 3 it is shown that the conveyor belt 3 consists out of a number of layers 9 and it is shown that the conveyor belt 3 consists out of a number of links 10 and a deck 11 in between two rows of links 10. Onto this deck 11 products 12 can be placed which are cooled off during their journey through the stacker 1.

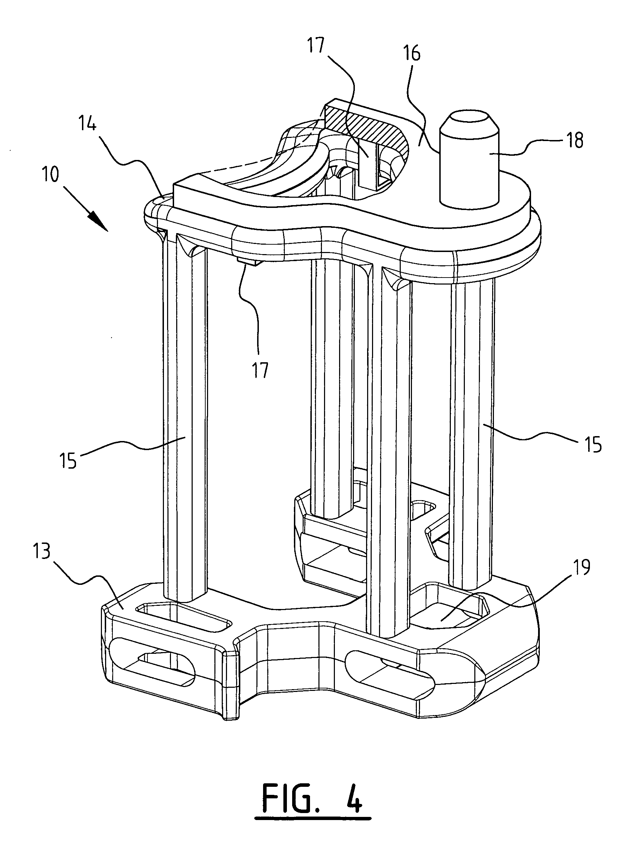

Figure 4 shows a link 10 having a chain link portion 13 onto which a support portion is arranged by pillars 15. Onto the support surface 14 a separate part 16 is arranged by a snapping action provided by the lips 17. This separate portion 16 has a protrusion 18, which can connect into the opening 19 of the chain link 13 supported by the support portion 14.

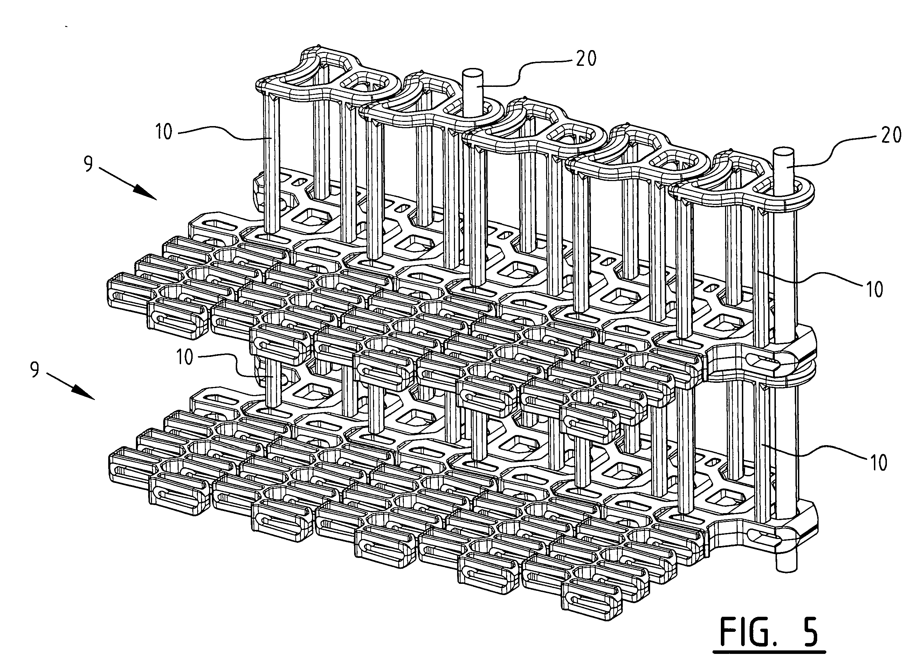

Figure 5 shows a second embodiment in which the links 10 of two adjacent layers 9 are connected by vertical rods 20. These rods 20 provide the same locking action as the protrusions 18, shown in figure 4. The driving forces present in the conveyor belt are distributed by these rods 20 or protrusions 18 and therefor equalized over the height of the stacker belt.

## Claims

1. Stacker comprising:
- at least two drums arranged vertically and at a distance of eachother;
- an endless stacker conveyor belt, at least partially wound around the at least two drums;
- locking means for locking adjacent layers of the stacker conveyor belt to eachother; and
- support means for supporting the bottom layer of the endless stacker belt.

2. Stacker according to claim 1, wherein the support means comprise at least one support conveyor belt for supporting at least the portion of the bottom layer between the at least two drums.

3. Stacker according to claim 2, wherein the at least one support conveyor belt is driven.

4. Stacker according to any of the preceding claims, wherein the endless stacker conveyor belt comprises a plurality of links having a support element for supporting part of an upper layer of the stacker conveyor belt.

5. Stacker according to claim 4, wherein the support element of a link comprises a protrusion extending from the support surface and the link comprises a recess for reception of a protrusion of a lower link.

6. Stacker according to claim 5, wherein the protrusion is removably arranged on the link.

7. Stacker according to any of the preceding claims, wherein the locking means comprise at least one rod extending substantially vertically through the several layers of the conveyor belt.

8. Stacker according to any of the preceding claims, comprising driving means for driving the endless stacker conveyor belt.
